# EUROPÄISCHE PATENTSCHRIFT

(11) **EP 4 363 718 B1**
(45) Veröffentlichungstag und Bekanntmachung des Hinweises auf die Patenterteilung: **09.09.2026**
(21) Anmeldenummer: 22738644.8
(22) Anmeldetag: 29.06.2022
(51) Int. Cl.: E04H 12/34, F03D 13/25, E02B 17/02

(54) **VERFAHREN ZUR HERSTELLUNG EINER VERBINDUNGSVORRICHTUNG FÜR EIN TURMARTIGES BAUWERK SOWIE TURMARTIGES BAUWERK**
METHOD FOR MANUFACTURING A CONNECTING DEVICE FOR A TOWER-LIKE STRUCTURE, AND TOWER-LIKE STRUCTURE
PROCÉDÉ PERMETTANT DE FABRIQUER UN DISPOSITIF DE RACCORDEMENT POUR UNE STRUCTURE DE TYPE TOUR, ET STRUCTURE DE TYPE TOUR

(30) Priorität: 29.06.2021 BE 202105505
(43) Veröffentlichungstag der Anmeldung: 08.05.2024
(73) Patentinhaber: Rosenxt Holding AG, 6370 Stans (CH)
(72) Erfinder: MOELLER, David, 49809 Lingen (DE); LINDNER, Alexander, 48607 Ochtrup (DE)
(74) Vertreter: Wischmeyer, André
(86) Internationale Anmeldenummer: PCT/EP2022/067915
(87) Internationale Veröffentlichungsnummer: WO 2023/275154

(56) Entgegenhaltungen:
- EP-A2- 3 255 210
- WO-A1-2017/178657
- WO-A1-2020/106146
- WO-A1-2021/040516
- WO-A2-2019/073060

## Beschreibung

Die vorliegende Erfindung betrifft ein Verfahren zur Herstellung einer Verbindungsvorrichtung für ein turmartiges Bauwerk. Des Weiteren betrifft die Erfindung ein turmartiges Bauwerk und eine Windkraftanlage umfassend ein solches turmartiges Bauwerk.

Aus der EP 3 443 224 B1 ist ein gattungsgemäßes Verfahren bekannt. Es hat sich jedoch gezeigt, dass es aufgrund von Abweichungen der typischerweise aus Metallplatten hergestellten, meterhohen Bauteile von deren Sollmaßen zu ungewünschten Spannungsspitzen insbesondere am unteren Ende des oberen Bauteils und am oberen Ende des unteren Bauteils kommen kann. AUS der WO2020/10614A1 ist ein Verfahren zur Herstellung einer Verbindungsvorrichtung für einer Windkraftanlage bekannt.

Es ist Aufgabe der vorliegenden Erfindung, diese Spannungsspitzen zu minimieren. Die Aufgabe wird gelöst durch ein Verfahren gemäß Anspruch 1 sowie durch Gegenstände gemäß Anspruch 16 oder 17. Vorteilhafte Ausgestaltungen der Erfindung sind den Unteransprüchen sowie der nachfolgenden Beschreibung zu entnehmen.

Das erfindungsgemäße Verfahren führt zur Herstellung einer Verbindungsvorrichtung für ein turmartiges Bauwerk insbesondere einer Offshore-Windkraftanlage, wobei die Verbindungsvorrichtung eine Mehrzahl von insbesondere plattenförmigen Verbindungselementen umfasst, die bei Herstellung eines Slip Joints zwischen einem oberen Bauteil des Bauwerks und einem unteren Bauteil des Bauwerks anzuordnen sind und zum Zweck des Lastabtrags zwischen dem oberen Bauteil und dem unteren Bauteil bezüglich einer zentralen Längsachse des Bauwerks in Umfangsrichtung um die Längsachse und/oder in deren Längsrichtung nebeneinander zu positionieren sind. Das Verfahren zeichnet sich dadurch aus, dass eine Istgröße des unteren und des oberen Bauteils beschreibende Daten bereitgestellt werden, woraufhin zumindest teilweise die Form, die Position und/oder die Beschaffenheit einzelner oder mehrerer sowie insbesondere aller Verbindungselemente der Verbindungsvorrichtung zur Optimierung des Lastabtrags und/oder zum Ausgleich etwaiger Abweichungen des unteren und/oder des oberen Bauteils von deren jeweiliger Sollgröße (des unteren und/oder des oberen Bauteils) verbindungselementspezifisch bestimmt werden und die bereits vorab oder dann hergestellten Verbindungselemente zur Montage an zumindest einem der Bauteile bereitgestellt werden.

Sofern die Verbindungselemente bereits vorab hergestellt und insbesondere in unterschiedlichen Ausgestaltungen gelagert wurden, werden sie anhand der verbindungselementspezifischen Vorgaben zusammen- bzw. bereitgestellt. Alternativ oder ergänzend werden die Verbindungselemente gemäß den Vorgaben spezifisch hergestellt sowie entsprechend zusammen- bzw. bereitgestellt. Die Bereitstellung umfasst somit eine insbesondere zumindest teilweise, vorzugsweise voll automatisierte Zusammenstellung und eine Verfügbarmachung der Verbindungselemente zum Zwecke des Transports zum Installationsort und der dortigen Montage an zumindest einem der Bauteile. Für die Montage selbst können die jeweiligen Verbindungselemente zusätzlich wie nachfolgend beschrieben noch weiter auf- und vorbereitet werden.

Die verbindungselementspezifische Bestimmung insbesondere der Form und der Position der plattenförmigen Verbindungselemente in einem Verbund von Verbindungselementen wird vorzugsweise weiterhin mit dem Ziel durchgeführt, eine optimale Anlage der plattenförmigen Verbindungselemente sowohl auf Seiten des unteren als auch des oberen Bauteils zu erreichen. Durch die Abweichungen der Bauteile bzw. eines der Bauteile von der jeweiligen Sollgröße kann beispielsweise ein vergrößerter Spalt auf einer Seite durch ein dickeres Verbindungselement ausgeglichen werden, so dass auch dort in einem Belastungsfall ein optimaler Kraftfluss bzw. Lastabtrag entstehen kann. In der Auslegung der Verbindungselemente müssen die Abweichungen der Bauteile von Ihren Sollgrößen nicht notwendigerweise ausgeglichen werden. So lange der Lastabtrag zwischen den Bauteilen optimiert ist, muss die Anordnung der Verbindungselemente beispielsweise an einem leicht ovalen Bauteil nicht notwendigerweise dazu führen, dass eine nun nicht mehr ovale Anlagefläche für das andere Bauteil entsteht. Eine Optimierung des Lastabtrags liegt dann vor, wenn die von einem Bauteil auf das andere Bauteil zu übertragenden Lasten auf die gewünschte Weise übertragen werden, beispielsweise also über möglichst große Flächen und insbesondere gleichmäßig verteilt nicht punkt- oder kleinflächig abgetragen werden.

Insbesondere wird bei der Bestimmung zumindest eines Teils der Form eines Verbindungselements dessen Dicke bestimmt, wobei auf eine Reihe von in Länge und Breite bereits vorgegebenen Verbindungselementen zurückgegriffen werden kann. Plättenförmig sind die Verbindungselemente insbesondere dann, wenn ihre Dicke deutlich kleiner ist als ihre Länge oder Breite, so dass sich flächig erstreckende Platten allerdings mit einer gewissen Biegsamkeit ergeben. Insbesondere ist die Dicke zumindest um einen Faktor 2 oder 3 geringer als die Länge und/oder Breite.

Die Istgröße der unteren und oberen Bauteile wird insbesondere durch zumindest zwei Punkte vorzugsweise auf einer Höhe, verbessert durch vier Punkte auf einer Höhe, sowie oben und unten und deren Lage zueinander bestimmt. Zwischen den einzelnen Punkten wird dann eine Form näherungsweise angenommen, insbesondere interpoliert vor dem Hintergrund beispielsweise einer Konusform. Besonders bevorzugt wird eine Vielzahl von zumindest mehr als 10 Messpunkten verwendet, mit denen eine Außenseite des unteren Bauteils sowie eine Innenseite des oberen Bauteils, welches zur Herstellung des Slip Joints über das untere Bauteil gestülpt wird, bestimmt wird. Beispielsweise werden mittels eines Laserscan-Messverfahrens mehr als 100 Messpunkte aufgenommen. Die Istgrößen beschreiben somit zumindest näherungsweise die reale Außenseite des unteren Bauteils sowie die reale Innenseite des oberen Bauteils. Bevorzugt werden die jeweiligen Geometrien durch eine Vielzahl von Punkten, durch Freiformflächen, durch 2D- und/oder 3D-Modelle beschrieben, so dass die Verbindungsvorrichtung möglichst genau ausgebildet werden kann. Die Istgrößen der einzelnen Bauteile sind die Realmaße derselben, die sich aufgrund etwaiger Toleranzen in der Herstellung von den gewünschten Maßen, d.h. den Sollmaßen der jeweiligen Bauteile unterscheiden können. Insbesondere beschreiben die zu verwendenden Daten die Istgrößen des unteren und/des oberen Bauteils hinsichtlich derer Konizität, Ovalität und/oder auch hinsichtlich des Versatzes einzelner Metallplatten, aus denen die jeweiligen Bauteile hergestellt sind, zueinander. Auch Schweißnahtüberhöhungen, Beulen o. dgl. können durch die Daten beschrieben werden und zumindest im Rahmen der jeweiligen Toleranzen der Verbindungsvorrichtung ausgeglichen werden. Die Beschaffenheit der Verbindungselemente umfasst insbesondere deren Shorehärte, deren Viskoelastizität, deren Kompressibilität, deren Oberflächenbeschaffenheit und/oder einen etwaigen Schichtaufbau.

Die Form der Verbindungselemente umfasst die Länge, die Breite und/oder die Dicke der vorliegend insbesondere plattenförmigen Verbindungselemente. Alternativ oder ergänzend umfasst die Form Ausnehmungen und/oder Abschrägungen eines jeweiligen Verbindungselements und/oder einen Dickenverlauf über das Verbindungselement. Zumindest eine dieser Variablen wird verbindungselementspezifisch dergestalt bestimmt, dass der Lastabtrag zwischen den beiden Bauteilen optimiert ist.

Die Position der Verbindungselemente umfasst insbesondere den Abstand der Verbindungselemente voneinander zwecks Berücksichtigung etwaiger viskoelastischer Verformungen der Verbindungselemente sowie ebenfalls die Positionierung jeweiliger Verbindungselemente am unteren oder oberen Bauteil.

Als untere und obere Bauteile kommen beispielsweise ein Monopile und ein sogenanntes Transition Piece oder auch ein Tri- oder Tetrapot, über dessen jeweiligen Stützen ein jeweiliges Transition Piece installiert wird, in Frage. Ebenfalls kann es sich um einen bei oberen und unterem Bauteil um ein Transition Piece und einen Tower bzw. dem obersten Teil einer Windkraftanlage mit Gondel und einer etwaigen Windrichtungsnachführungsvorrichtung handeln.

Durch den Ausgleich von etwaigen Abweichungen der unteren und oberen Bauteile von deren Soll-Größe bzw. deren Sollmaßen mittels der erfindungsgemäßen Verbindungsvorrichtung wird ein eigentlich gewünschter Kraftfluss in unterschiedlichen Belastungssituationen des turmartigen Bauwerks realisiert.

Vorteilhafterweise wird für die Bestimmung der jeweiligen Verbindungselemente die Form eines im installierten Zustand der Bauteile vorhandenen Spalts zwischen dem oberen und unteren Bauteil auf Basis der Istgrößen der beiden Bauteile bestimmt. Ausgehend von einer gegebenenfalls auch vom Material der verwendeten Verbindungselemente abhängigen und gewünschten optimierten Ausbildung eines optimierten Abstands der Bauteile voneinander können dann die Dicken der jeweiligen Verbindungselemente gewählt werden. Hierbei kann -gegebenenfalls in Abhängigkeit des verwendeten Materials für die Verbindungsvorrichtung- eine optimale mittlere Dicke für den mittels der Verbindungsvorrichtung zumindest teilweise zu schliessenden Spalt zwischen oberen und unterem Bauteil vorgegeben werden (z.B. 3, 4 oder 5 cm), woraufhin die Dicken der jeweiligen Verbindungselemente in Abhängigkeit der Istgrößen bestimmt werden.

Für die Bestimmung der Dicke jeweiliger Verbindungselemente ist es vorteilhaft, diese aus einem vorgegebenen Rastermaß, welches insbesondere zwischen 10 mm und 120 mm liegt, ausgewählt werden. Hierdurch können entsprechende Verbindungselemente auf Vorrat produziert werden, so dass bei der Bestimmung der Maße der Verbindungselemente diese aus einer jeweiligen Platten- bzw. Verbindungselementgröße ausgewählt werden können. Die Verteilung der vorhandenen Dicken in der Bestimmung der Größe und/oder Form der Verbindungselemente ist hierbei so, dass eine möglichst vollständige Anlage an allen Verbindungselementen im belasteten Zustand gegeben ist, d.h. sowohl auf Seiten des unteren als auch Seiten des oberen Bauteils die jeweils einander zugewandten Flächen des Bauteils und des Verbindungselements aneinander anliegen. Es versteht sich, dass die Anlageflächen der Verbindungselemente diejenigen sind, die die größten Oberflächen der flächig bzw. plattenförmig ausgebildeten Verbindungselemente darstellen. Beispielsweise können bei einem 10 mm Rastermaß hinsichtlich der Verbindungselementdicke zehn verschiedene Dicken zwischen einschließlich 10 mm und einschließlich 120 mm vorgehalten werden, wobei die Verbindungselemente gegenüber dieser Dicke bzw. Höhe eine Erstreckung von beispielsweise 400 mm x 800 mm aufweisen.

Die verbindungselementspezifische Bestimmung erfolgt vorzugsweise mittels einer EDV-Vorrichtung, in der die Istmaße der Bauteile abgelegt sind und in der auf Basis der Abweichungen von einem Sollmaß die jeweiligen Verbindungselemente bestimmt werden. Beispielsweise ist bei einer leicht ovalen Querschnittsform eines unteren Bauteils und einem Querschnitt (horizontal) kreisrunden oberen Bauteil ein jeweils im Bereich der Hauptachse der Ellipse anzuordnendes Verbindungselement leicht dünner auszubilden als ein im Bereich der Nebenachse angeordnetes Verbindungselement. Hierbei kann beispielsweise eine Umhüllende um die auf einem unteren Bauteil angeordneten Verbindungselemente im Querschnitt betrachtet wiederum kreisförmig sein. Vielmehr ist es allerdings notwendig, dass unabhängig davon, ob es sich um eine kreisförmige Umhüllende handelt, über die entsprechenden Verbindungselemente die anstehenden Lasten korrekt abgetragen werden. Hierbei kann die viskoelastische Verformung und/oder auch Kompressibilität der Verbindungselemente berücksichtigt werden genauso wie etwaige, aufgrund beispielsweise eines Aufstellungsorts der Bauteile vorhandene spezifische Lasten beispielsweise aufgrund einer Hauptwindrichtung.

Bei der EDV-Vorrichtung (Elektronische Datenverarbeitungsvorrichtung) kann es sich um ein lokal arbeitendes System oder auch um eine zumindest teilweise entfernt vom Bediener angeordnete EDV-Vorrichtung handeln. Die EDV-Vorrichtung umfasst übliche Eingabe-, Ausgabe-, Kommunikations- und Speichermittel sowie zugehörige Datenverarbeitungsmöglichkeiten. Beispielsweise handelt es sich um ein lokal zur Aufnahme der Daten und Anzeige der Informationen fähiges EDV-Gerät, welches die Daten zwecks Berechnung der Verbindungselemente zu einer Cloudbasierten EDV-Einheit übermittelt. Nach der dort erfolgenden Bestimmung der Verbindungselemente können die hiermit einhergehenden Daten dann wieder an den lokal arbeitenden Rechner übermittelt werden.

Durch die EDV-Vorrichtung kann insbesondere ein Installationsplan erstellt werden, der eine möglichst schnelle Installation aller Verbindungselemente in einer vorzugsweise vorgegebenen Reihenfolge vorgibt. Dies erfolgt insbesondere unter Berücksichtigung einer vorteilhafterweise liegenden Position eines während der Installation zumindest sukzessive zu drehenden Bauteils. Vorzugsweise befindet sich der obere Bauteil hierfür auf einer Rollenanlage. Für den Fall einer auf der Innenseite erfolgenden Ausstattung eines oberen Bauteils mit Verbindungselementen können beispielsweise zunächst die dickeren Verbindungselemente auf die Innenseite gelegt werden, woraufhin sich dann dünnere Elemente anschließen. Bei einer beispielsweise um 90° erfolgenden Drehung um eine Längsachse des Bauteils kann dann der in Umfangsrichtung daneben liegende Bereich beschichtet werden, so dass insgesamt nach dreimaligem Drehen die Innenseite des unteren Bauteils in Umfangsrichtung vollständig belegt ist, wobei eine vollständige Belegung die Belegung aller hierfür vorgesehenen Verbindungselemente meint, welche auch auf Abstand zueinander angeordnet sein können.

Vorzugsweise erfolgt die Bestimmung der Verbindungselemente unter Berücksichtigung einer angenommenen Belastung derselben, und zwar insbesondere aufgrund eines Lastübergangs zwischen einem unteren und einem oberen Bauteil. Vorzugsweise handelt es sich um einen Lastübergang vom oberen auf den unteren Bauteil, wobei Lasten z.B. durch das Gewicht des oberen Bauteils inkl. etwaiger darauf anzusetzender Teil einer Windkraftanlage und/oder durch Windlast bedingt sein können. Alternativ oder ergänzend kann es sich auch um welleninduzierte Lasten handeln, beispielsweise durch Bewegungen einer schwimmenden Plattform, auf der eine Windkraftanlage installiert ist. Insbesondere werden für die Bauteile und die dazwischen angeordneten Verbindungselemente jeweilige 2D- und/oder 3D-Modelle verwendet, beispielsweise mittels einer FEM-Simulation.

Die mittels der EDV-Vorrichtung vorzunehmende Bestimmung der Verbindungselemente stellt ein Optimierungsproblem dar, welches insbesondere durch ein KIbasiertes Verfahren mittels neuronaler Netze die Bestimmung der Verbindungselemente und insbesondere derer Dicken ermöglicht. Etwaige Trainingsdatensätze können über Simulationen basierend auf FEM-Berechnungen gewonnen werden.

In der Berechnung der Verbindungselemente können Teile der zu bestimmenden Größen auch vorgegeben sein, beispielsweise das Verbindungselementmaterial in Form der vorhandenen Kompressibilität, Viskoelastizität und/oder auch beispielsweise einer Durchschnittsgröße. In der Belastungsrechnung kann neben einer Hauptwindrichtung auch ein dynamischer Installationsvorgang des oberen Bauteils auf dem unteren Bauteil berücksichtigt werden, beispielsweise wenn zunächst eine erste Last in Form des oberen Bauteils auf das untere Bauteil aufgesetzt wird und anschließend zusätzlich auf das obere Bauteil beispielsweise eine Gondel aufgesetzt wird, die den Rotor und die zugehörige Getriebeanordnung enthält.

Die für die Bestimmung der verbindungselementspezifischen Angaben verwendeten Daten können einerseits einzelne Messpunkte oder auch Modelle der Istgröße sein. Es kann sich auch um Abbildungen derselben beispielsweise in Form der Sollgröße des unteren und des oberen Bauteils zuzüglich etwaiger Abweichungen von den jeweiligen Sollgrößen handeln. Entsprechend können die Berechnungen z.B. in Form von Optimierungsrechnungen auf Basis der Abweichungen von der Sollgröße erfolgen.

Gleichfalls können in der verbindungselementspezifischen Bestimmung Toleranzen der Bauteile und/oder der Verbindungselemente, z.B. aufgrund einer Messung berücksichtigt werden, so dass die hiermit einhergehende Unsicherheit in der Bestimmung beispielsweise durch besonders kompressibles Material berücksichtigt werden kann.

Insbesondere umfassen die Daten des oberen und/oder unteren Bauteils zumindest die Höhe im Verbindungsbereich, die Konizität, die Ovalität, die Oberflächenkrümmung und/oder wenigstens eine Schweißnahtüberhöhung, wobei die entsprechenden Werte absolute Werte sein können oder wie beispielsweise hinsichtlich der Sollmaße und deren Abweichungen auch Abbildungen derselben Daten sein können. So ist es mit vergleichsweise wenigen Daten möglich, die Bestimmung der Verbindungselemente vorzunehmen. Der Verbindungsbereich ist derjenige Bereich des Bauwerks, der zwischen (einschließlich) der obersten Kante des oder der obersten Verbindungselemente und der untersten Kante des oder der unteren Verbindungelemente liegt. Eine Schweißnahtüberhöhung ist die Höhe und/oder Kontur einer Schweißnaht im Vergleich zum keine Schweißnaht darstellenden, umgebenden Bereich des Bauteils auf der im Betrieb des Bauteils zum Verbindungselement weisenden Seite des Bauteils.

Vorteilhafterweise sind die für das Bauwerk zu verwendenden Verbindungselemente insbesondere farblich und/oder mit einem Informationsträger gekennzeichnet, was die Installation entsprechend vereinfacht. Hierbei kann es sich auch um beispielsweise einen auf Drahtlostechnik basierenden Informationsträger wie einen RFID-Chip handeln, der automatisiert mit entsprechenden Positionsmarkierungen versehen wird, so dass der Vorgang der Kommissionierung der Verbindungselemente aus einem Lager heraus möglichst vollautomatisch erfolgen kann. Alternativ oder ergänzend kann es sich auch um Aufkleber oder Markierungen auf dem jeweiligen Verbindungselement handeln.

Insbesondere bei einem mit variierender Dicke versehenen Verbindungselement kann über einen solchen Informationsträger auch eine Relativposition des Verbindungselements, d.h. eine Ausrichtung hinsichtlich der Kanten (oben, unten, links, rechts) in Bezug auf das jeweilige Bauteil bestimmt werden, so dass ein verdrehtes und/oder spiegelverkehrtes Anordnen des Verbindungselements ausgeschlossen werden kann.

Gemäß einer Weiterbildung des erfindungsgemäßen Verfahrens ist zumindest ein Verbindungselement vorgefertigt und wird anhand der verbindungselementspezifischen Bestimmung angepasst. Hierbei kann es sich beispielsweise um ein Verkürzen der Abmessungen, ein Ausschneiden einzelner Bereiche, die Einbringung von Hohlräumen zwecks Veränderung einer Kompressibilität, das Verfüllen der Hohlräume, die Abkantung und das Aufbereiten von Oberflächen, das Beschichten mittels Kleber, Kleberfolie oder anderen Beschichtungen, beispielsweise zur Reibungsreduktion, handeln. Durch die Bevorratung einzelner Größen können schnell die benötigten Teile hergestellt werden.

Insbesondere werden die Verbindungselemente an einem unteren Bauteil oder an einem oberen Bauteil befestigt, wobei vorzugsweise zumindest eine von jeweiligen miteinander in Verbindung zu bringenden Oberflächen vorbehandelt, insbesondere gereinigt, oberflächenaktiviert und/oder mit einem Haftvermittler und/oder einem Kleber beschichtet wird. Eine Oberflächenaktivierung kann vorzugsweise auf mechanische, chemische oder elektrochemische Weise, z.B. über eine Plasma-Behandlung erfolgen. Das Aufbringen von Haftvermittlern, Klebern oder anderen Beschichtungen erfolgt wie auch die Behandlung der Oberfläche eines Verbindungselements jeweils zumindest auf einem Teil der Oberfläche eines jeweiligen Verbindungselements, wobei beispielsweise eine Applikationsvorrichtung verwendet wird, durch die eine genaue Bearbeitung/Ausstattung der Oberfläche ermöglicht ist.

Die Installation erfolgt insbesondere anhand des Installationsplans, der die Position und ggf. auch die Abfolge einzelner miteinander oder nebeneinander anzuordnender Verbindungselemente darstellt.

Die Verbindungselemente können auch aneinander befestigt werden, um durch Kombination verschieden dicker Verbindungselemente weitere Verbindungselemente, deren Dicke sich aufgrund der Kombination der Dicken ergibt, zur Verfügung stellen zu können.

Manuell oder mittels einer Applikationsvorrichtung kann die Oberfläche eines der Bauteile und/oder eines der Verbindungselemente insbesondere reibungsreduzierend beschichtet werden, beispielweise mit einem PTFE (Polytetrafluorethylen). Eine Applikationsvorrichtung kann eine mobile Vorrichtung sein, die für die Installation aufgebaut wird, und beispielsweise einen Zuführbereich und einen Abgabebereich aufweist, zwischen denen ein Verbindungselement an einer Auftragsrolle entlang bewegt wird. Die Applikationsvorrichtung dient der Aufbringung beispielsweise eines Klebers, unmittelbar vor der Befestigung des Verbindungselements an dem Bauteil.

Vorzugsweise liegt das Bauteil, an dem das zumindest eine Verbindungselement angeordnet wird, auf seiner äußeren Mantelfläche, wobei es insbesondere auf einer Rollenanlage angeordnet ist. Das ansonsten vertikal mit seiner Längsachse zum horizontalen Untergrund anzuordnende Bauteil ist also gekippt, so dass seine Längsachse beispielsweise zwar nicht exakt parallel jedoch unter Nichtbeachtung der Konizität im Wesentlichen parallel zum Untergrund verläuft. Für eine Installation der Verbindungselemente in Umfangsrichtung um die Längsachse herum, kann das Bauteil, bei dem es sich insbesondere um das Transition Piece handelt, dann sukzessive gedreht werde, beispielsweise mittels der Rollenanlage. Die Installation über die gesamte Höhe des Bauteils ist somit vereinfacht.

Des Weiteren kann eine Pressvorrichtung vorgesehen werden, die ein jeweiliges Verbindungselement bzw. die Verbindungselemente mit einer vordefinierten Kraft an das jeweilige Bauteil drückt. In einem einfachen Fall kann es sich hierbei um Magnete handeln, mit denen die Verbindungselemente an einer Oberfläche des typischerweise metallischen Bauteils gehalten werden. Es kann sich allerdings auch um eine in Abhängigkeit von der Größe der Verbindungselemente einstellbare Vorrichtung handeln, die selbst magnetisch an den Bauteilen gehalten sein kann und über entsprechende Arme oder andere Andrückelemente eine Anpresskraft auf das Verbindungselement erzeugt.

Vorzugsweise ist die Größe der Verbindungselemente dergestalt ausgelegt, dass eins dieser von einer Installationsperson alleine getragen und während der Installation an dem Bauteil gehalten werden kann. In diesem Fall liegt das Gewicht eines Verbindungselements unter 50 kg.

Vorzugsweise werden die Daten bezüglich der Istgröße der Bauteile mittels einer insbesondere Licht- und vorzugsweise Laser-basierten Messvorrichtung und/oder mittels einer Bildanalyse auf Basis von von den Bauteilen angefertigten Bildern gewonnen. Insbesondere letzteres vereinfacht die Aufnahme der Istgrößen. Die aufgenommenen Daten können von den Bauteilherstellern online zur Verfügung gestellt werden und in die EDV-Vorrichtung eingelesen werden.

Zur Vereinfachung des erfindungsgemäßen Verfahrens werden die Verbindungselemente in rechteckigen Formen gegossen, wobei das verwendete Material eine gewisse Elastizität zur Verfügung stellen kann, damit sich die plattenförmigen Verbindungselemente an eine Krümmung der Oberfläche des jeweiligen Bauteils anpassen können. Die Verwendung rechteckiger Formen ermöglicht insbesondere die Verwendung offener Formen und somit eine einfachere Herstellung. Alternativ können auch geschlossenen Formen verwendet werden, die auch gekrümmte Wandungen aufweisen können. Nach dem Gießen und einem üblichen ersten Aushärten der Verbindungselemente werden diese vorzugsweise ergänzend getempert und/oder anschließend gesäubert, letzteres beispielsweise mittels eines Isopropanols. Dies vereinfacht das spätere Anbringen von Haftvermittlern, Klebern oder anderen Beschichtungen. Die Verbindungselemente können vor oder nach einem Transport zum Installationsort beschichtet und/oder oberflächenbehandelt werden.

Die eingangs gestellte Aufgabe wird ebenfalls gelöst durch ein turmartiges Bauwerk, insbesondere einen Teil einer Offshore-Windkraftanlage, die eine nach einem der vorherigen Ansprüche hergestellte Verbindungsvorrichtung umfasst. Dieser kommen die Vorteile der vorbeschriebenen Verbindungsvorrichtung zugute.

Ebenfalls wird die Aufgabe gelöst durch eine Windkraftanlage, insbesondere eine Offshore-Windkraftanlage, die ein vorbeschriebenes turmartiges Bauwerk aufweist.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand,
- Fig. 2: einen Teil des erfindungsgemäßen Gegenstands nach Fig. 1 in einer geschnittenen und perspektivischen Ansicht,
- Fig. 3: einen weiteren erfindungsgemäßen Gegenstand in einer Schnittansicht,
- Fig. 4: einen Ausschnitt des Gegenstands nach Fig. 3,
- Fig. 5 und Fig. 6: Ansichten unterschiedlicher Messvorgänge,

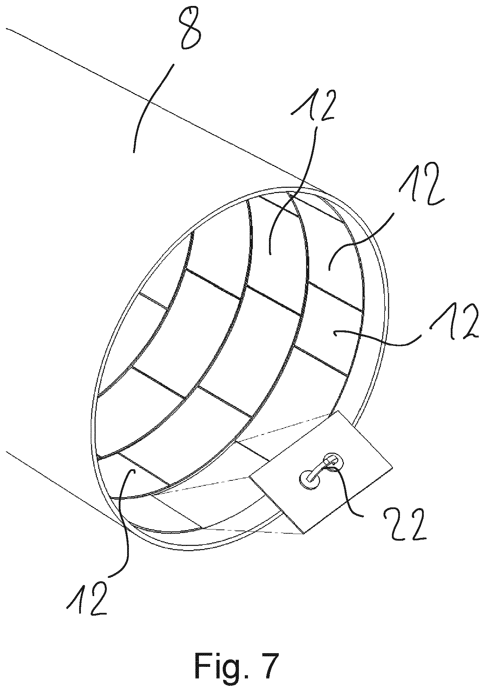

- Fig. 7: einen Teil eines Herstellungsverfahrens eines erfindungsgemäßen Gegenstands.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

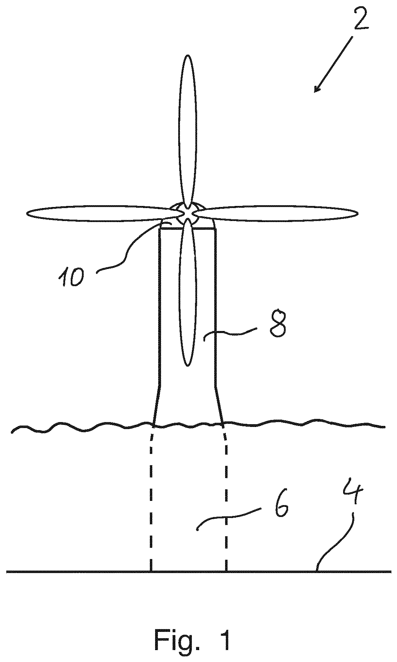

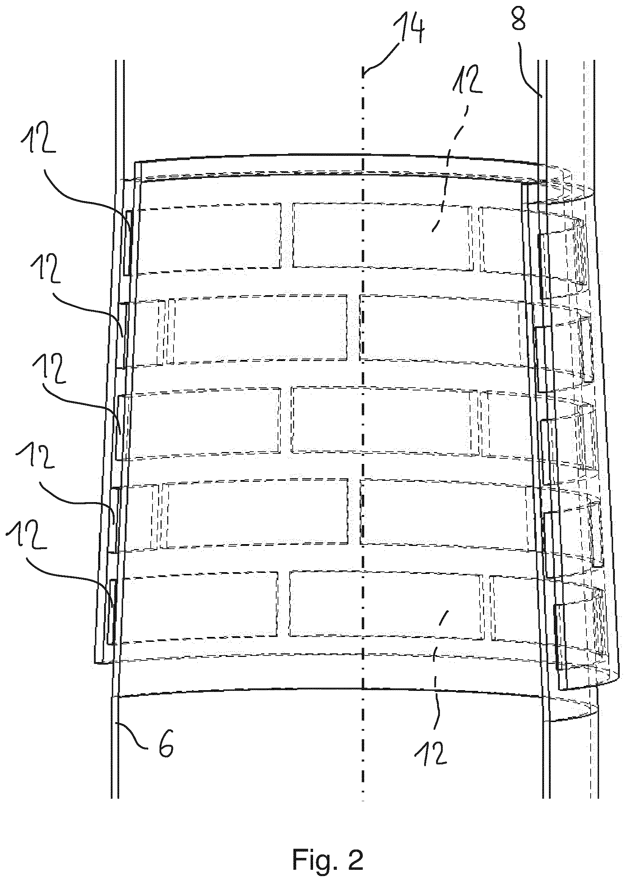

Eine erfindungsgemäße Windkraftanlage 2 umfasst einen auf einem horizontal verlaufenden Untergrund 4 vertikal aufgestellten unteren Bauteil 6, auf den ein oberer Bauteil 8 gestülpt wird, der an seinem oberen Ende eine Gondel 10 mit Rotoren aufweist (Fig. 1). Die Windkraftanlage 2 und das aus einer noch nicht erkennbaren Verbindungsvorrichtung und dem unteren und dem oberen Bauteil 6 bzw. 8 bestehende turmartige Bauwerk weisen eine zentralen Längsachse 14 auf, um die die Verbindungselemente 12 herum angeordnet sind. Die Längsachse 14 (vergl. Fig. 2) verläuft senkrecht zum Untergrund 4.

Im Ausführungsbeispiel nach Fig. 1 bzw. 2 umfasst die Windkraftanlage 2 bzw. das turmartige Bauwerk fünf Ringe von jeweils mehreren Verbindungselementen 12, die zum Zwecke des Lastabtrags zwischen einer oberen Außenoberfläche des unteren Bauteils 6 und einer unteren Innenoberfläche des Bauteils 8 angeordnet sind und die fertigungsbedingte Toleranzen dieser Bauteile bezüglich des Lastabtrags ausgleichen.

Für die Bestimmung der Dicken der Verbindungselemente 12 wurden nach der Herstellung des unteren und oberen Bauteils 6, 8 deren reale Größen zumindest in dessen jeweiligen konisch ausgebildeten Abschnitt bestimmt, woraufhin in einer EDV-Vorrichtung nach Bereitstellung der Messdaten die optimale Größe für die Verbindungselemente inklusive deren Positionierung bestimmt wurde. Hieraus ergibt sich im vorliegenden Fall nach Fig. 2, dass die Dicke der Verbindungselemente 12 der übereinander angeordneten Ringe unterschiedlich ausgebildet ist. In einer solchen Optimierungsrechnung kann zusätzlich darauf abgestellt werden, dass ein hauptsächlicher Lastabtrag in der Mitte des Verbindungsbereichs, d.h. vom oberen und vom unteren Rand des konusförmigen Abschnitts des unteren Bauteils 6 und des oberen Bauteils 8 entfernt, dicker ausgebildet werden, um dort mehr Lasten zu übertragen.

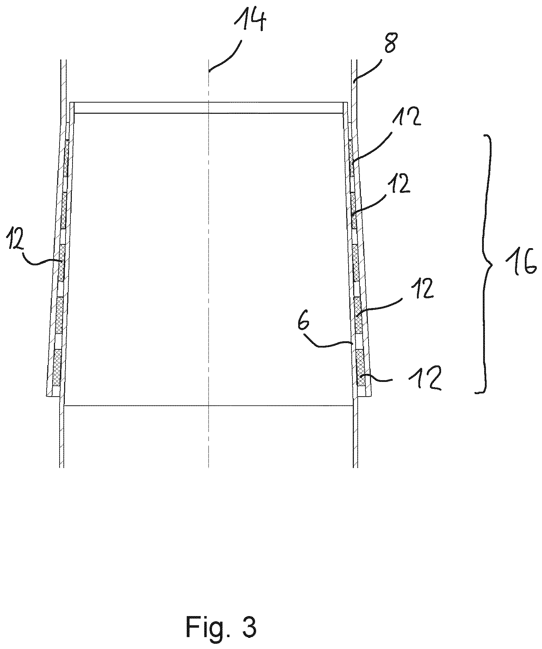

Im Ausführungsbeispiel nach der Fig. 3, welches ein weiteres Ausführungsbeispiel eines erfindungsgemäßen, turmartigen Bauwerks darstellt, weicht der Winkel des Konus des oberen Bauteils 8 toleranzbedingt ungewollte von dem Winkel des Konus des unteren Bauteils 6 ab, so dass sich zwischen diesen in der dargestellten Betriebsposition ein nach unten zum Untergrund hin größer werdender Spalt ausbildet. Entsprechend ergibt sich auch eine größere Dicke der Verbindungselemente 12 an dem unteren Ende des Verbindungsbereiches 16, der allgemein nach oben hin von einer oberen Kante des oder der obersten Verbindungselemente 12 begrenzt ist und der allgemein nach unten hin von der unteren Kante der untersten Verbindungselemente 12 begrenzt ist. Aufgrund des Ausgleichs der Toleranzen ergibt sich aufgrund der erfindungsgemäßen Verbindungsvorrichtung der gewünschte Lastabtrag zwischen dem oberen und dem unteren Bauteil.

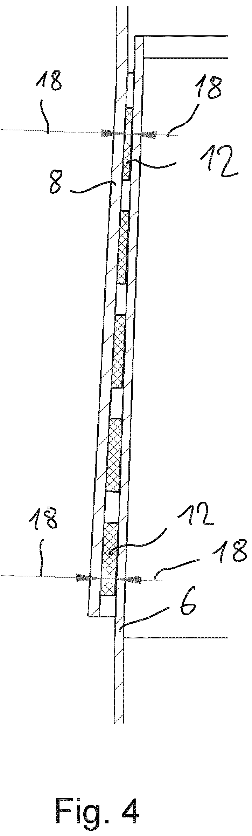

In der Detailansicht nach Fig. 4 ist erkennbar, dass die Dicke der unteren Verbindungselemente 12 in etwa doppelt so groß ist wie die Dicke der oberen Verbindungselemente 12. Die Dicke ist der Abstand der Pfeilspitzen jeweiliger Pfeile 18, die senkrecht auf den zum unteren Bauteil 6 bzw. oberen Bauteil 8 liegenden Oberflächen stehen. Vorliegend ist die Dicke diejenige der Verbindungselemente in deren belasteten Zustand. Es versteht sich, dass die Dicke im unbelasteten Fall, in dem die Verbindungselemente 12 nicht verformt sind, größer sein kann. Insofern wird vorzugsweise und allgemein für die Bestimmung der Verbindungselemente z.B. im Wege einer Optimierungsrechnung auf belastete Verbindungselemente 12 abgestellt, für die Herstellung und/oder Bereitstellung werden jedoch zweckmäßigerweise die Dicken unbelasteter Bauteile angegeben.

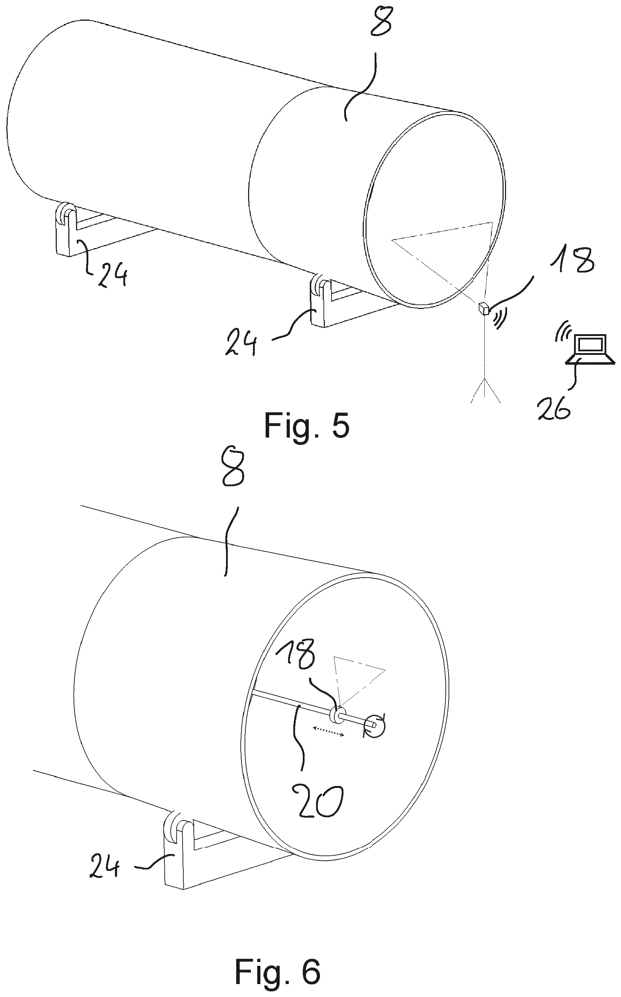

Zur Bestimmung der Istmaße der Bauteile 6, 8 können mobile Messvorrichtungen 18 gemäß der Fig. 5 oder 6 verwendet werden. Eine Messvorrichtung 18 kann hierfür per Laser von einem Bereich außerhalb des vorliegend oberen Bauteils 8 dessen innere Oberfläche im Konus scannen. Alternativ kann eine Messvorrichtung 18 in das obere Bauteil 8 eingeführt werden, wobei die Messvorrichtung dergestalt auf einer Stange 20 geführt wird, dass durch deren Längs- und Schwenkbewegung ebenfalls die Innenseite des oberen Bauteils 8 im Bereich dessen Konus gescannt wird. Die von der Messvorrichtung 18 aufgenommenen Daten werden beispielsweise drahtlos und über das Internet in eine EDV-Vorrichtung 26 überführt, in der dann die Dicke der jeweiligen Verbindungselemente sowie deren Position bestimmt werden. Sofern unterschiedliche Materialien zur Herstellung der Verbindungselemente 12 zu Verfügung stehen, kann die EDV-Vorrichtung 26 im Rahmen der Optimierung des Lastübertrags zwischen dem oberen Bauteil 8 und dem unteren Bauteil 6 ebenfalls auch das Material der Verbindungselemente 12 vorgeben. Nach deren Herstellung, vorzugsweise in einem PU-Gießverfahren, werden die Verbindungselemente 12 gesäubert, oberflächenbehandelt und beschichtet und anschließend mit einer Tragevorrichtung 22 an die hierfür vorgesehene Position in den Bauteil 8 gebracht, wo sie verklebt werden. Die Installation der Verbindungselemente 12 erfolgt vorzugsweise in einem unteren Bereich der Innenseite, so dass das Bauteil 8 für die Installation aller Verbindungselemente in Umfangsrichtung um die im Betriebsfall senkrecht zum Untergrund stehende Längsachse 14 des Bauteils mittels einer Rollenanlage 24 gedreht werden muss. Nach der Installation der Verbindungsvorrichtung kann das vorliegend als Transition Piece ausgebildete obere Bauteil 8 an seinen Einsatzort verbracht und dort installiert werden.

## Patentansprüche

1. Verfahren zur Herstellung einer Verbindungsvorrichtung für ein turmartiges Bauwerk insbesondere einer Offshore-Windkraftanlage (2), wobei die Verbindungsvorrichtung eine Mehrzahl von insbesondere plattenförmigen Verbindungselementen (12) umfasst, die bei Herstellung eines Slip Joints zwischen einem oberen Bauteil (8) des Bauwerks und einem unteren Bauteil (6) des Bauwerks anzuordnen sind und zum Zweck des Lastabtrags zwischen dem oberen Bauteil (8) und dem unteren Bauteil (6) bezüglich einer zentralen Längsachse (14) des Bauwerks in Umfangsrichtung um die Längsachse (14) und/oder in deren Längsrichtung nebeneinander zu positionieren sind, **dadurch gekennzeichnet, dass**
eine Istgröße des unteren und des oberen Bauteils (6, 8) beschreibende Daten bereitgestellt werden, woraufhin zumindest teilweise die Form, die Position und/oder die Beschaffenheit einzelner oder mehrerer sowie insbesondere aller Verbindungselemente (12) der Verbindungsvorrichtung zur Optimierung des Lastabtrags und/oder zum Ausgleich etwaiger Abweichungen des unteren und/oder des oberen Bauteils (6, 8) von deren Sollgröße verbindungselementspezifisch bestimmt werden und die vorab und/oder dann hergestellten Verbindungselemente zur Montage an zumindest einem der Bauteile (6, 8) bereitgestellt werden.

2. Verfahren nach Anspruch 1, **dadurch gekennzeichnet, dass** für die Bestimmung der jeweiligen Verbindungselemente (12) die Form eines im installierten Zustand der Bauteile (6, 8) vorhandenen Spalts zwischen dem oberen und unteren Bauteil (6, 8) auf Basis der Istgrößen der beiden Bauteile bestimmt wird.

3. Verfahren nach einem der vorherigen Ansprüche, **dadurch gekennzeichnet, dass** die Dicke jeweiliger Verbindungselemente (12) aus einem vorgegebenen Rastermaß, welches insbesondere zwischen 10 mm und 120 mm liegt, ausgewählt wird.

4. Verfahren nach einem der vorherigen Ansprüche, **dadurch gekennzeichnet, dass** die verbindungselementspezifische Bestimmung mittels einer EDV-Vorrichtung (26) erfolgt.

5. Verfahren nach Anspruch 4, **dadurch gekennzeichnet, dass** die Bestimmung unter Berücksichtigung einer angenommenen Belastung der Verbindungselemente (12), insbesondere aufgrund eines Lastübergangs zwischen unterem und oberen Bauteil (6, 8), erfolgt, wobei insbesondere jeweilige 2D- und/oder 3D-Modelle für die Bauteile verwendet werden.

6. Verfahren nach einem der vorherigen Ansprüche, **dadurch gekennzeichnet, dass** für die verbindungselementspezifische Bestimmung Daten bezüglich einer Sollgröße des unteren und/oder des oberen Bauteils (6, 8) zuzüglich etwaiger Abweichungen von jeweiligen Sollgrößen bereitgestellt werden.

7. Verfahren nach einem der vorherigen Ansprüche, **dadurch gekennzeichnet, dass** die Daten des oberen und/oder unteren Bauteils (6, 8) zumindest die Höhe im Verbindungsbereich, die Konizität, die Ovalität, die Oberflächenkrümmung und/oder eine Schweißnahtüberhöhung darstellen oder abbilden.

8. Verfahren nach einem der vorherigen Ansprüche, **dadurch gekennzeichnet, dass** die für das Bauwerk zu verwendenden Verbindungselemente (12) insbesondere farblich und/oder mit einem Informationsträger gekennzeichnet sind.

9. Verfahren nach einem der vorherigen Ansprüche, **dadurch gekennzeichnet, dass** zumindest ein Verbindungselement (12) vorgefertigt ist und anhand der verbindungselementspezifischen Bestimmung angepasst wird.

10. Verfahren nach einem der vorherigen Ansprüche, **dadurch gekennzeichnet, dass** die Verbindungselemente (12) an einem unteren Bauteil (6) und/oder einem oberen Bauteil (8) befestigt werden, insbesondere wobei zumindest eine von jeweiligen miteinander in Verbindung zu bringenden Oberflächen vorab vorbehandelt, insbesondere gereinigt, oberflächenaktiviert und/oder mit einem Haftvermittler und/oder einem Kleber beschichtet wird.

11. Verfahren nach Anspruch 10, **dadurch gekennzeichnet, dass** vorzugsweise mittels einer Applikationsvorrichtung die Oberfläche eines der Bauteile und/oder eines der Verbindungselemente insbesondere reibungsreduzierend, vorzugsweise mit PTFE, beschichtet wird.

12. Verfahren nach einem der vorherigen Ansprüche 10 oder 11, **dadurch gekennzeichnet, dass** die Verbindungselemente an dem Bauteil angeordnet werden, während dieses auf seiner äußeren Mantelfläche und insbesondere auf einer Rollenanlage liegt.

13. Verfahren nach einem der vorherigen Ansprüche 10 bis 12, **gekennzeichnet durch** eine zumindest eines der Verbindungselemente mit einer vordefinierten Kraft an das jeweilige Bauteil drückende Pressvorrichtung.

14. Verfahren nach einem der vorherigen Ansprüche, **dadurch gekennzeichnet, dass** die Daten bezüglich der Istgröße der Bauteile (6, 8) mittels einer Laser-basierten Messvorrichtung (18) und/oder mittels einer Bildanalyse auf Basis von von den Bauteilen angefertigten Bildern gewonnen werden.

15. Verfahren nach einem der vorherigen Ansprüche, **dadurch gekennzeichnet, dass** die Verbindungselemente (12) in insbesondere rechteckigen Formen gegossen werden sowie anschließend insbesondere getempert und/oder gesäubert werden.

16. Turmartiges Bauwerk, insbesondere Teil einer Offshore-Windkraftanlage, umfassend eine nach einem der vorherigen Ansprüche hergestellte Verbindungsvorrichtung.

17. Windkraftanlage, insbesondere Offshore-Windkraftanlage (2), umfassend ein turmartiges Bauwerk nach Anspruch 16.

## Claims

1. Method for producing a connecting device for a tower-like structure, in particular of an offshore wind turbine (2), wherein the connecting device comprises a plurality of in particular plate-shaped connecting elements (12) which, for producing a slip joint, are to be arranged between an upper component (8) of the structure and a lower component (6) of the structure and, for the purpose of load transfer between the upper component (8) and the lower component (6), are, in relation to a central longitudinal axis (14) of the structure, to be positioned one next to the other in a circumferential direction around the longitudinal axis (14) and/or in the longitudinal direction thereof,
**characterized in that**
provision is made of data which describes an actual size of the lower and upper components (6, 8), whereupon, at least partially, the shape, position and/or condition of individual or multiple and in particular all of the connecting elements (12) of the connecting device are determined in a connecting-element-specific manner for optimizing the load transfer and/or for compensating any deviations of the lower and/or the upper component (6, 8) from the target size thereof, and provision is made of the previously and/or subsequently produced connecting elements for mounting on at least one of the components (6, 8).

2. Method according to Claim 1, **characterized in that**, for determining the respective connecting elements (12), the shape of a gap between the upper and lower components (6, 8) that is present in the installed state of the components (6, 8) is determined on the basis of the actual sizes of the two components.

3. Method according to either of the preceding claims, **characterized in that** the thickness of respective connecting elements (12) is selected according to a predefined standardized spacing, which is in particular between 10 mm and 120 mm.

4. Method according to one of the preceding claims, **characterized in that** the connecting-element-specific determination is realized by means of a computing device (26).

5. Method according to Claim 4, **characterized in that** the determination is realized with account taken of an assumed loading of the connecting elements (12), in particular due to a load transfer between the lower and upper components (6, 8), wherein in particular respective 2D and/or 3D models are used for the components.

6. Method according to one of the preceding claims, **characterized in that**, for the connecting-element-specific determination, provision is made of data concerning a target size of the lower and/or the upper component (6, 8) plus any deviations from respective target sizes.

7. Method according to one of the preceding claims, **characterized in that** the data for the upper and/or the lower component (6, 8) represent or depict at least the height in the connection region, the conicity, the ovality, the surface curvature and/or an increased weld-seam thickness.

8. Method according to one of the preceding claims, **characterized in that** the connecting elements (12) to be used for the structure are identified in particular by colour and/or using an information carrier.

9. Method according to one of the preceding claims, **characterized in that** at least one connecting element (12) has been prefabricated and is adapted on the basis of the connecting-element-specific determination.

10. Method according to one of the preceding claims, **characterized in that** the connecting elements (12) are fastened to a lower component (6) and/or to an upper component (8), in particular wherein at least one of respective surfaces to be brought into connection with one another is pre-treated, in particular cleaned, surface-activated and/or coated with an adhesion promoter and/or an adhesive, beforehand.

11. Method according to Claim 10, **characterized in that**, preferably by means of an application device, the surface of one of the components and/or of one of the connecting elements is coated, in particular in a friction-reducing manner, preferably with PTFE.

12. Method according to either of preceding Claims 10 and 11, **characterized in that** the connecting elements are arranged on the component while the latter rests on its outer lateral surface and in particular on a roller system.

13. Method according to one of preceding Claims 10 to 12, **characterized by** a pressing device which presses at least one of the connecting elements onto the respective component with a predefined force.

14. Method according to one of the preceding claims, **characterized in that** the data concerning the actual size of the components (6, 8) are obtained by means of a laser-based measuring device (18) and/or by means of an image analysis on the basis of images made of the components.

15. Method according to one of the preceding claims, **characterized in that** the connecting elements (12) are cast in in particular rectangular moulds and, subsequently, are in particular tempered and/or cleansed.

16. Tower-like structure, in particular part of an offshore wind turbine, comprising a connecting device produced according to one of the preceding claims.

17. Wind turbine, in particular an offshore wind turbine (2), comprising a tower-like structure according to Claim 16.

## Revendications

1. Procédé de fabrication d'un dispositif de raccordement pour un ouvrage de construction de type tour, en particulier d'une éolienne offshore (2), le dispositif de raccordement comprenant une multitude d'éléments de raccordement (12), en particulier en forme de plaque, qui, lors de la fabrication d'un joint coulissant, doivent être disposés entre un composant supérieur (8) de l'ouvrage de construction et un composant inférieur (6) de l'ouvrage de construction et doivent être positionnés, aux fins du transfert de charges entre le composant supérieur (8) et le composant inférieur (6), dans la direction périphérique autour de l'axe longitudinal (14) par rapport à un axe longitudinal central (14) de l'ouvrage de construction et/ou l'un à côté de l'autre dans leur direction longitudinale,
**caractérisé en ce que**
sont fournies des données décrivant une grandeur réelle du composant inférieur et du composant supérieur (6, 8) pour déterminer de manière spécifique à l'élément de raccordement au moins en partie la forme, la position et/ou la nature de divers ou de plusieurs et en particulier de la totalité des éléments de raccordement (12) du dispositif de raccordement pour optimiser la décharge de charge et/ou pour compenser des écarts éventuels du composant inférieur et/ou du composant supérieur (6, 8) par rapport à leur grandeur théorique et de fournir les éléments de raccordement fabriqués au préalable et/ou ensuite pour le montage sur au moins un des composants (6, 8).

2. Procédé selon la revendication 1, **caractérisé en ce que**, pour la détermination des éléments de raccordement (12) respectifs, la forme d'un interstice existant dans l'état installé des composants (6, 8) entre le composant supérieur et le composant inférieur (6, 8) est déterminée sur la base des grandeurs réelles des deux composants.

3. Procédé selon l'une des revendications précédentes, **caractérisé en ce que** l'épaisseur d'éléments de raccordement (12) respectifs est choisie à partir d'une dimension modulaire prédéfinie, qui se situe en particulier entre 10 mm et 120 mm.

4. Procédé selon l'une des revendications précédentes, **caractérisé en ce que** la détermination spécifique à l'élément de raccordement est effectuée au moyen d'un dispositif de traitement électronique des données (26).

5. Procédé selon la revendication 4, **caractérisé en ce que** la détermination est effectuée en tenant compte d'une charge supposée des éléments de raccordement (12), en particulier en raison d'un passage de charges entre le composant inférieur et le composant supérieur (6, 8), des modèles 2D et/ou 3D étant utilisés en particulier pour les composants.

6. Procédé selon l'une des revendications précédentes, **caractérisé en ce que** pour la détermination spécifique à l'élément de raccordement, des données relatives à une grandeur cible du composant inférieur et/ou du composant supérieur (6, 8) plus d'éventuels écarts par rapport à des grandeurs cibles respectives sont fournies.

7. Procédé selon l'une des revendications précédentes, **caractérisé en ce que** les données du composant supérieur et/ou inférieur (6, 8) représentent ou reproduisent au moins la hauteur dans la zone de raccordement, la conicité, l'ovalité, la courbure de surface et/ou une élévation de cordon de soudure.

8. Procédé selon l'une des revendications précédentes, **caractérisé en ce que** les éléments de raccordement (12) à utiliser pour l'ouvrage de construction sont marqués en particulier en couleur et/ou avec un support d'informations.

9. Procédé selon l'une des revendications précédentes, **caractérisé en ce qu'**au moins un élément de raccordement (12) est préfabriqué et est adapté à l'aide de la détermination spécifique à l'élément de raccordement.

10. Procédé selon l'une des revendications précédentes, **caractérisé en ce que** les éléments de raccordement (12) sont fixés sur un composant inférieur (6) et/ou sur un composant supérieur (8), en particulier au moins une de surfaces respectives à raccorder entre elles étant traitée au préalable, en particulier nettoyée, activée en surface et/ou revêtue d'un promoteur d'adhérence et/ou d'un adhésif.

11. Procédé selon la revendication 10, **caractérisé en ce que** la surface de l'un des composants et/ou de l'un des éléments de raccordement est revêtue, de préférence au moyen d'un dispositif d'application, en particulier de manière à réduire le frottement, de préférence de PTFE.

12. Procédé selon l'une des revendications précédentes 10 ou 11, **caractérisé en ce que** les éléments de raccordement sont disposés sur le composant tandis que celui-ci repose sur sa surface enveloppante extérieure et en particulier sur une installation de rouleaux.

13. Procédé selon l'une des revendications précédentes 10 à 12, **caractérisé par** un dispositif de pressage pressant au moins un des éléments de raccordement contre le composant respectif avec une force prédéfinie.

14. Procédé selon l'une des revendications précédentes, **caractérisé en ce que** les données relatives à la grandeur réelle des composants (6, 8) sont obtenues au moyen d'un dispositif de mesure laser (18) et/ou au moyen d'une analyse d'image sur la base d'images produites par les composants.

15. Procédé selon l'une des revendications précédentes, **caractérisé en ce que** les éléments de raccordement (12) sont coulés en particulier dans des moules rectangulaires, et sont ensuite en particulier trempés et/ou nettoyés.

16. Ouvrage de construction de type tour, en particulier partie d'une éolienne offshore, comprenant un dispositif de raccordement fabriqué selon l'une des revendications précédentes.

17. Eolienne, en particulier éolienne offshore (2), comprenant un ouvrage de construction de type tour selon la revendication 16.
